# EUROPEAN PATENT SPECIFICATION

(11) **EP 3 910 436 B1**
(45) Date of publication and mention of the grant of the patent: **19.02.2025**
(21) Application number: 20785893.7
(22) Date of filing: 14.08.2020
(51) Int. Cl.: G05B 23/02, B61L 7/10, B61L 27/16, B61L 5/18

(54) **SIGNAL AUTOMATIC DEGRADING METHOD FOR FULLY ELECTRONIC INTERLOCKING, AND SYSTEM**
VERFAHREN UND SYSTEM ZUR AUTOMATISCHEN SIGNALABSTUFUNG FÜR VOLL-ELEKTRONISCHE STELLWERKE
MÉTHODE ET SYSTÈME DE DÉGRADATION AUTOMATIQUE DE SIGNAL POUR ENCLENCHEMENT TOTALEMENT INFORMATIQUE

(30) Priority: 03.04.2020 CN 202010257259
(43) Date of publication of application: 17.11.2021
(73) Proprietor: CRSC RESEARCH & DESIGN INSTITUTE GROUP CO., LTD., Fengtai District Beijing 100070 (CN)
(72) Inventor: NIE, Zhiguo, Beijing 100070 (CN); WANG, Chunhua, Beijing 100070 (CN); JIN, Songyue, Beijing 100070 (CN); ZHANG, Fusong, Beijing 100070 (CN); DU, Yunbing, Beijing 100070 (CN); WANG, Ye, Beijing 100070 (CN); JIA, Jiyu, Beijing 100070 (CN); CHEN, Qiang, Beijing 100070 (CN)
(74) Representative: Meissner Bolte Partnerschaft mbB
(86) International application number: PCT/CN2020/109263
(87) International publication number: WO 2021/196499

(56) References cited:
- EP-A1- 2 030 862
- CN-A- 102 320 316
- CN-A- 104 077 922
- CN-A- 107 831 751
- CN-A- 108 001 483
- CN-A- 109 270 373
- CN-A- 111 142 507
- CN-U- 204 303 170
- JP-A- 2008 242 986
- US-A- 5 307 050
- BURKHARD M ET AL: "Erstes "EBI Lock 500_DB" ohne BZ-Anbindung in der Zuverlaessigkeitserprobung", SIGNAL UND DRAHT: SIGNALLING & DATACOMMUNICATION, EURAILPRESS, DE, vol. 100, no. 3, 1 March 2008 (2008-03-01), pages 8 - 12, XP001510908, ISSN: 0037-4997
- CELINSKI K: "CONTROL OF SIGNALS AND POINT MACHINES IN INTERLOCKING SYSTEM ERILOCK 850", ERICSSON REVIEW (INCL. ON), TELEFONAKTIEBOLAGET L M ERICSSON, SE, vol. 64, no. 4, 1 January 1987 (1987-01-01), pages 182 - 188, XP000404479, ISSN: 0014-0171

## Description

### TECHNICAL FIELD

The present invention relates to the field of rail transport technology, and more particularly, to an automatic degradation method and system for a full electronic interlocking signal.

### BACKGROUND

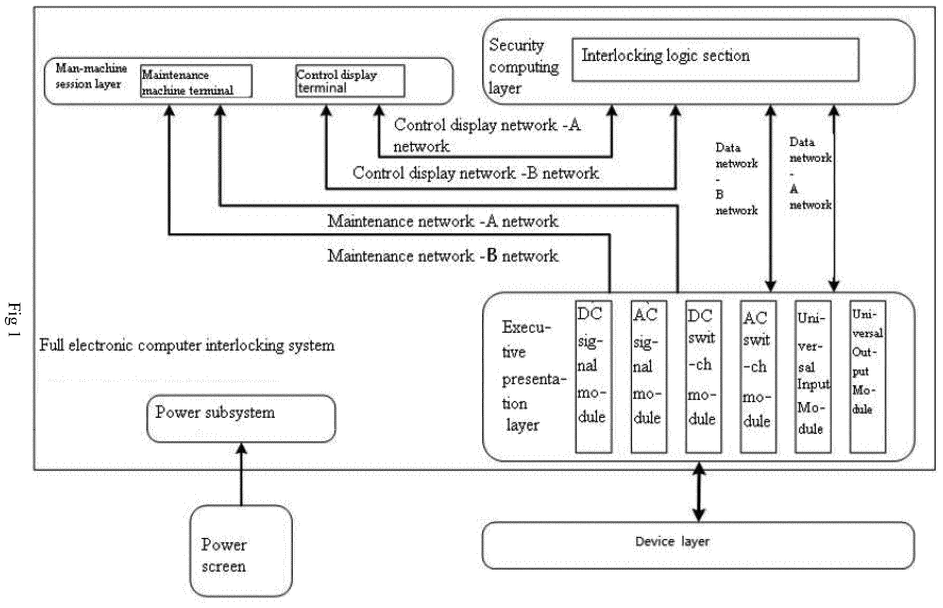

The full electronic interlocking uses the signal control module instead of the traditional relay circuit to control clearing of the signal. The DS6-60 full electronic interlocking system adopts the prior mature interlocking computer of the DS6-60 system as the safe operation logic platform, and the full electronic modules (the signal module, the switch module, the universal input output module) as the execution unit to complete direct control over signal devices, the system structure is shown in FIG. 1.

The interlocking computer (the safe logic operation computer) sends a control command to the execution unit, the signal module executes the command to control a light point of the signal to be lightened or extinguished, meanwhile it sends the clearing state of the signal to the interlocking computer. When the clearing state of the signal is abnormal, for example, the interlocking computer requires the green light to be cleared by the signal, but the green light bulb cannot be lightened, the signal module will feed back to the interlocking computer that the green light cannot be lightened, the interlocking computer determines that the state does not meet expectations and then it changes the control command. Usually the signal module and the interlocking computer use Ethernet to communicate, there is a certain delay in the information exchange process, the delay time may be relatively long when the communication is interfered, especially when the signal fails in the case where the prohibition light needs to be lightened urgently (such as lightening a red light point), a too long delay time will seriously reduce safety and availability of the system.

Therefore, how to control the signal to switch the signal state in time and improve safety and availability of the system has become an urgent problem to be solved.

### SUMMARY

In view of the above problem, the present invention provides an automatic degradation method for a full electronic interlocking signal according to claim 1.

Further, the control command includes: a signal clearing command, a signal lower-level clearing command, and a signal clearing command plus a signal lower-level clearing command.

Further, managing, by the signal module, a signal according to the control command specifically is:
supplying, by the signal module, power to a target light point of the signal according to the control command, meanwhile stopping power supply of other light points of the signal.

Further, determining, by the signal module, whether to perform signal automatic degradation according to the indication state cleared by the signal specifically is:
if the indication state cleared by the signal is normal indication, not performing signal automatic degradation;
if the indication state cleared by the signal is abnormal indication or that optimal indication cannot be lightened normally, performing signal automatic degradation.

Further, determining a type of signal automatic degradation specifically is:
when the indication state cleared by the signal is abnormal indication, performing abnormality protection degradation;
when the indication state cleared by the signal is that optimal indication cannot be normally lightened, performing availability degradation.

Further, the abnormality protection degradation specifically is:
directly converting, by the signal module, the signal to a safe indication state.

Further, the availability degradation includes:
feeding back, by the signal module, the indication state cleared by the signal to the interlocking computer;
switching, by the interlocking computer, the control command to a signal lower-level clearing command according to the indication state cleared by the signal as received and sending it to the signal module;
if the signal module receives the signal lower-level clearing command within a set time period, supplying, by the signal module, power to a new target light point of the signal according to the signal lower-level clearing command, meanwhile stopping power supply of other light points of the signal;
if the signal module does not receive the signal lower-level clearing command within a set time period, lightening, by the signal module, a prohibition light point of the signal.

Further, the availability degradation further includes:
directly and actively using, by the signal module, the signal lower-level clearing command to supply power to a new target light point of the signal, meanwhile stopping power supply of other light points of the signal.

Further, the auxiliary information includes command execution state and failure information.

There is further provided an automatic degradation system for a full electronic interlocking signal according to claim 5.

Further, the control command includes: a signal clearing command, a signal lower-level clearing command, and a signal clearing command plus a signal lower-level clearing command.

Further, managing a signal according to the control command specifically is:
supplying, by the signal module, power to a target light point of the signal according to the control command, meanwhile stopping power supply of other light points of the signal.

Further, determining whether to perform signal automatic degradation according to the indication state cleared by the signal specifically is:
if the indication state cleared by the signal is normal indication, not performing signal automatic degradation;
if the indication state cleared by the signal is abnormal indication or that optimal indication cannot be lightened normally, performing signal automatic degradation.

Further, determining a type of signal automatic degradation specifically is:
when the indication state cleared by the signal is abnormal indication, performing abnormality protection degradation;
when the indication state cleared by the signal is that optimal indication cannot be normally lightened, performing availability degradation.

Further, the abnormality protection degradation specifically is:
directly converting, by the signal module, the signal to a safe indication state.

Further, the availability degradation includes:
feeding back, by the signal module, the indication state cleared by the signal to the interlocking computer;
switching, by the interlocking computer, the control command to a signal lower-level clearing command according to the indication state cleared by the signal as received and sending it to the signal module;
if the signal module receives the signal lower-level clearing command within a set time period, supplying, by the signal module, power to a new target light point of the signal according to the signal lower-level clearing command, meanwhile stopping power supply of other light points of the signal;
if the signal module does not receive the signal lower-level clearing command within a set time period, lightening, by the signal module, a prohibition light point of the signal.

Further, the availability degradation further includes:
directly and actively using, by the signal module, the signal lower-level clearing command to supply power to a new target light point of the signal, meanwhile stopping power supply of other light points of the signal.

Further, the auxiliary information includes command execution state and failure information.

By differentiating the degradation function, the present invention makes a division into abnormality protection degradation and availability degradation. For abnormality protection degradation, respond can be made quickly when danger indication is found, which improves the processing speed and avoids the time delay caused by a system failure or external factors; for availability degradation, degradation response time is reduced through an additional command mode, which improves safety and availability.

Other features and advantages of the present invention will be discribed in the following description, some of them will become obvious from the description or will be understood by implementing the present invention. The objects and other advantages of the present invention can be realized and obtained through the structures indicated in the specification, claims and drawings.

### BRIEF DESCRIPTION OF THE DRAWINGS

In order to more clearly illustrate the technical solutions in the embodiments of the present invention or in the prior art, the drawings necessary for description of the embodiments or the prior art will be briefly introduced below, obviously, the drawings in the following description are some embodiments of the present invention, other drawings can be obtained by those of ordinary skill in the art based on these drawings without paying creative efforts.
FIG. 1 shows a structure diagram of the DS6-60 full electronic interlocking system according to the prior art;
FIG. 2 shows a schematic diagram of an automatic degradation method for a full electronic interlocking signal according to an embodiment of the present invention;
FIG. 3 shows a flow chart of abnormality protection degradation according to an embodiment of the present invention;
FIG. 4 shows a flow chart of passively performing availability degradation according to an embodiment of the present invention;
FIG. 5 shows a flow chart of actively performing availability degradation not according to the invention and shown for illustration purposes only;
FIG. 6 shows a schematic diagram of a system structure according to an embodiment of the present invention.

### DETAILED DESCRIPTION OF THE EMBODIMENTS

In order to make the objects, technical solutions and advantages of the embodiments of the present invention more clear, the technical solutions in the embodiments of the present invention will be described clearly and completely in conjunction with the accompanying drawings in the embodiments of the present invention, obviously, the described embodiments are only part of the embodiments of the present invention, not all the embodiments.

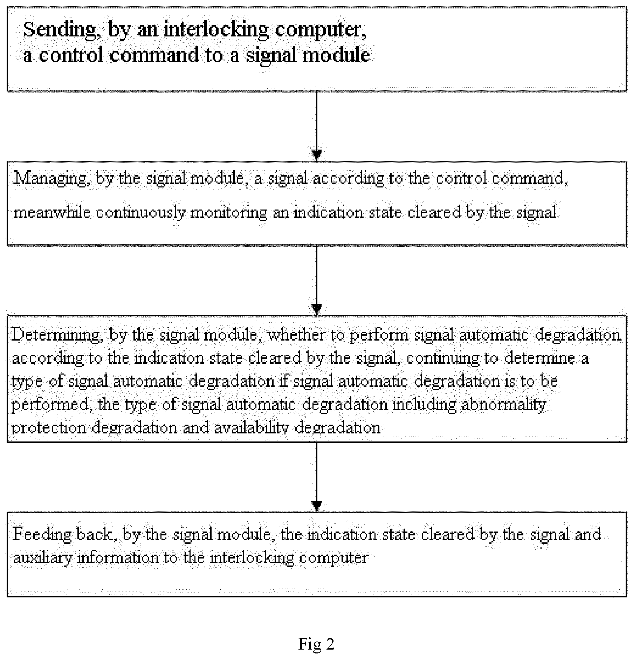

The present invention provides an automatic degradation method for a full electronic interlocking signal, exemplarily, FIG. 2 shows a schematic diagram of an automatic degradation method for a full electronic interlocking signal according to an embodiment of the present invention. As shown in FIG. 2, the method includes:
sending, by an interlocking computer, a control command to a signal module;
specifically, the control command includes: a signal clearing command, a signal lower-level clearing command, and a signal clearing command plus a signal lower-level clearing command;
managing, by the signal module, a signal according to the control command, meanwhile continuously monitoring an indication state cleared by the signal;
specifically, supplying, by the signal module, power to a target light point of the signal according to the control command, meanwhile stopping power supply of other light points of the signal.
determining, by the signal module, whether to perform signal automatic degradation according to the indication state cleared by the signal, continuing to determine a type of signal automatic degradation if signal automatic degradation is to be performed, the type of signal automatic degradation including abnormality protection degradation and availability degradation; and feeding back, by the signal module, the indication state cleared by the signal and auxiliary information to the interlocking computer; wherein the auxiliary information includes command execution state and failure information;
specifically, if the indication state cleared by the signal is normal indication, not performing signal automatic degradation;
if the indication state cleared by the signal is abnormal indication or that optimal indication cannot be lightened normally, performing signal automatic degradation.
further, when the indication state cleared by the signal is abnormal indication, performing abnormality protection degradation;
when the indication state cleared by the signal is that optimal indication cannot be normally lightened, performing availability degradation.

The abnormality protection degradation specifically is: directly converting, by the signal module, the signal to a safe indication state.

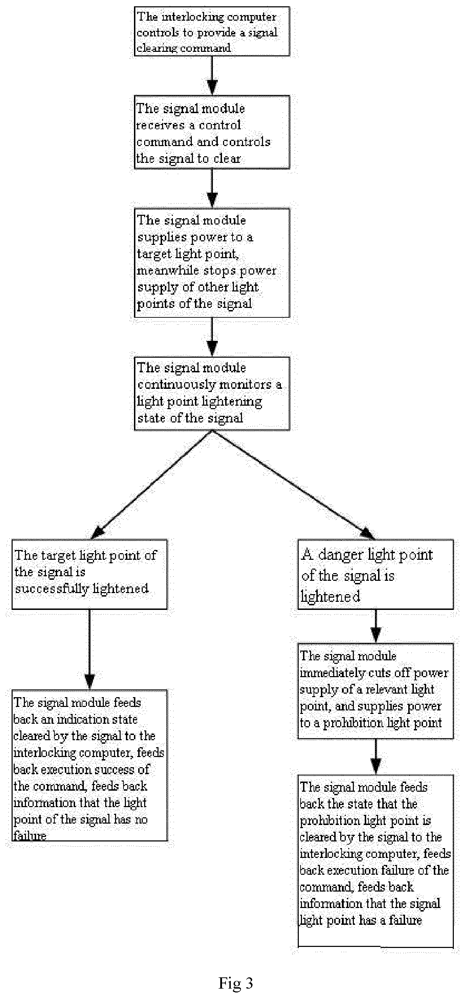

Exemplarily, FIG. 3 shows a flow chart of abnormality protection degradation according to an embodiment of the present invention, as shown in FIG. 3:
S1: the interlocking computer controls to provide a signal clearing command, so as to control the signal to clear;
S2: the signal module receives a control command and controls the signal to clear;
S3: the signal module supplies power to a target light point, meanwhile stops power supply of other light points of the signal;
S4: the signal module continuously monitors a light point lightening state of the signal;
S51: the target light point of the signal is successfully lightened;
S52: the signal module feeds back an indication state cleared by the signal to the interlocking computer, feeds back execution success of the command, feeds back information that the light point of the signal has no failure;
S61: the indication state cleared by the signal is indication abnormality, that is, a danger light point of the signal is lightened;
S62: the signal module immediately cuts off power supply of a relevant light point, and supplies power to a prohibition light point, converts the signal into a safe indication state;
S63: the signal module feeds back the state that the prohibition light point is cleared by the signal to the interlocking computer, feeds back execution failure of the command, feeds back information that the signal light point has a failure.

The availability degradation includes:
feeding back, by the signal module, the indication state cleared by the signal to the interlocking computer;
switching, by the interlocking computer, the control command to a signal lower-level clearing command according to the indication state cleared by the signal as received and sending it to the signal module;
if the signal module receives the signal lower-level clearing command within a set time period, supplying, by the signal module, power to a new target light point of the signal according to the signal lower-level clearing command, meanwhile stopping power supply of other light points of the signal;
if the signal module does not receive the signal lower-level clearing command within a set time period, lightening, by the signal module, a prohibition light point of the signal.

The above-described availability degradation means that the signal module passively performs availability degradation.

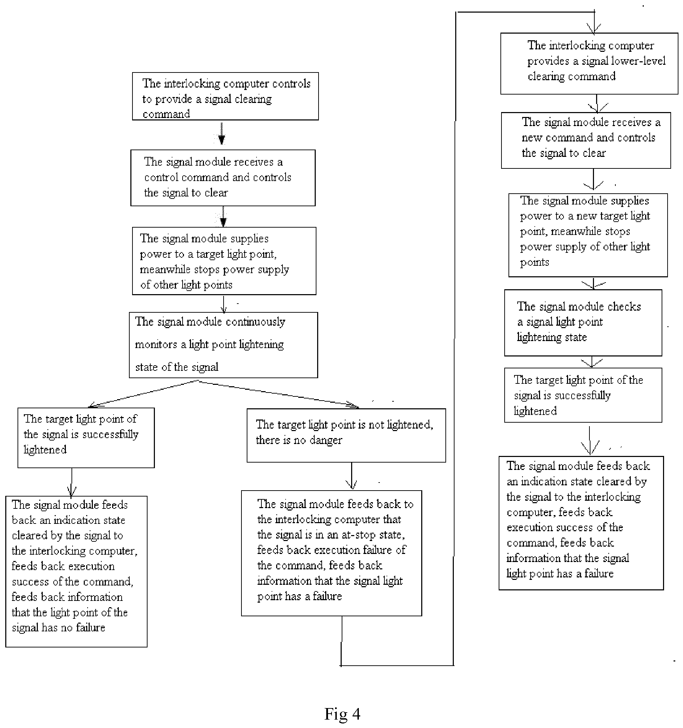

Exemplarily, FIG. 4 shows a flow chart of passively performing availability degradation according to an embodiment of the present invention, as shown in FIG. 4:
S1: the interlocking computer controls to provide a signal clearing command, so as to control the signal to clear;
S2: the signal module receives a control command and controls the signal to clear;
S3: the signal module supplies power to a target light point, meanwhile stops power supply of other light points;
S4: the signal module continuously monitors a light point lightening state of the signal;
S51: the target light point of the signal is successfully lightened;
S52: the signal module feeds back an indication state cleared by the signal to the interlocking computer, feeds back execution success of the command, feeds back information that the light point of the signal has no failure;
S61: optimal indication cannot be lightened, that is, the target light point is not lightened, there is no danger;
S62: the signal module feeds back to the interlocking computer that the signal is in an at-stop state, feeds back execution failure of the command, feeds back information that the signal light point has a failure;
S63: the interlocking computer provides a signal lower-level clearing command;
S64: the signal module receives a new command and controls the signal to clear;
S65: the signal module supplies power to a new target light point, meanwhile stops power supply of other light points;
S66: the signal module checks a signal light point lightening state;
S67: the target light point of the signal is successfully lightened;
S68: the signal module feeds back an indication state cleared by the signal to the interlocking computer, feeds back execution success of the command, feeds back information that the signal light point has a failure.

Alternatively not according to the invention, the availability degradation further includes:
directly and actively using, by the signal module, the signal lower-level clearing command to supply power to a new target light point of the signal, meanwhile stopping power supply of other light points of the signal.

As used herein, the availability degradation means that the signal module actively performs availability degradation, which is suitable for scenarios that require a response speed for availability degradation.

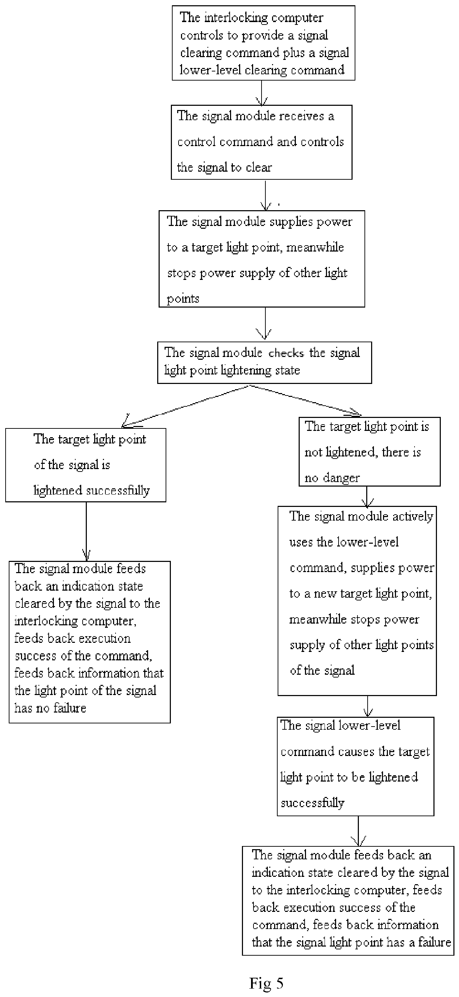

Exemplarily, FIG. 5 shows a flowchart of actively performing availability degradation which is not according to the invention and shown for illustration purposes only:
S1: the interlocking computer controls to provide a signal clearing command plus a signal lower-level clearing command, so as to control the signal to clear;
S2: the signal module receives a control command and controls the signal to clear;
S3: the signal module supplies power to a target light point, meanwhile stops power supply of other light points;
S4: the signal module continuously monitors the signal light point lightening state;
S51: the target light point of the signal is lightened successfully;
S52: the signal module feeds back an indication state cleared by the signal to the interlocking computer, feeds back execution success of the command, feeds back information that the light point of the signal has no failure;
S61: optimal indication cannot be lightened normally, that is, the target light point is not lightened, there is no danger;
S62: the signal module actively uses the lower-level command, supplies power to a new target light point, meanwhile stops power supply of other light points of the signal;
S63: the signal lower-level command causes the target light point to be lightened successfully;
S64: the signal module feeds back an indication state cleared by the signal to the interlocking computer, feeds back execution success of the command, feeds back information that the signal light point has a failure.

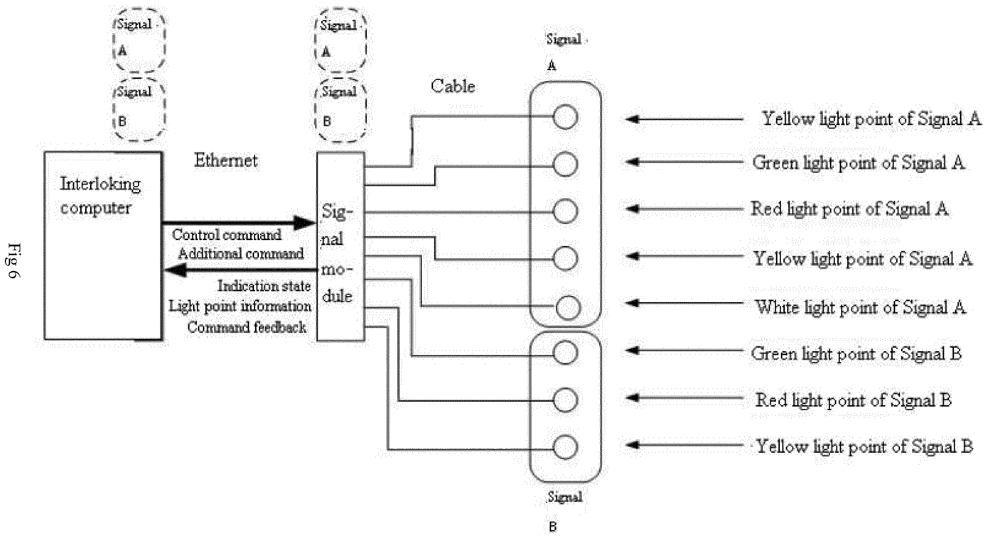

The embodiment of the present invention takes two signals as an example for description. Illustratively, FIG. 6 shows a schematic diagram of a system structure according to an embodiment of the present invention. As shown in FIG. 6, there are five light points in the signal A, which sequentially are the yellow light point, the green light point, the red light point, the yellow light point, and the white light point; for railway lines having less information that need to indicate, the signal B can be used to direct traffic, there are three light points in the signal B, which sequentially are the green light point, the red light point, and the yellow light point. The interlocking computer sends commands and information to the signal module through the Ethernet, and the signal module controls the light point in the signal to indicate through the cable.

It should be noted that light point setting of the above-described signal may also adopt other different types.

### During abnormality protection degradation:

Exemplarily, indication of both the green light and the yellow light being concurrently cleared by the signal A is taken as an example, after receiving the command from the interlocking computer, the signal module cuts off power supply of other light points, meanwhile it supplies power to the yellow light, supplies power to the green light after the yellow light is lightened. When both the green light and the yellow light are lightened, the signal module feeds back to the interlocking computer an indication state that the green light and the yellow light are already cleared by the signal, feeds back execution success of the command, feeds back information that the light point is normal. After the green light and the yellow light are lightened, the signal module continuously monitors lightening of the light point. If the yellow light is accidentally extinguished and the green light remains lightened, the signal module determines that the signal indication is abnormal and there is a safety risk, power supply to the yellow light and the green light is stopped immediately, power is supplied to the red light instead, meanwhile the signal module feeds back to the interlocking computer an indication state that the red light is cleared by the signal A, feeds back execution failure of the command, feeds back information that the yellow light point has a failure, so as to realize rapid protection against dangerous failure. Correspondingly, the interlocking computer receives the failure information, switches the signal command to a red light command, and alarms the operation and maintenance personnel at the same time. After the green light and the yellow light are lightened, the signal module continuously monitors lightening of the light point. If the green light is found to be accidentally extinguished and the yellow light remains lightened, the interlocking computer only performs a corresponding availability degradation.

When the signal module passively performs availability degradation:
Exemplarily, indication of the green light being cleared by the signal A is taken as an example, the yellow light is defined as a lower-level signal command of the green light in practical applications. After receiving the command from the interlocking computer, the signal module cuts off power supply of other light points and meanwhile supplies power to the green light. After the green light is lightened, the signal module feeds back to the interlocking computer an indication state that the green light is already cleared by the signal, feeds back execution success of the command, feeds back information that the light point is normal. After the green light is lightened, the signal module continuously monitors lightening of the light point. If the green light is found to be accidentally extinguished, the signal module feeds back to the interlocking computer an indication state that the signal A stops, feeds back execution failure of the command, feeds back information that the green light point has a failure. The interlocking computer receives the failure information, switches the signal command to a lower-level yellow light command, and alarms the operation and maintenance personnel at the same time; after the signal module receives the yellow light command, the signal module cuts off power supply of the green light and supplies power to the yellow light instead, after the yellow light is lightened, the signal module feeds back to the interlocking computer an indication state that the yellow light is already cleared by the signal, feeds back success execution of the command, and continues to feed back information that the green light has a failure. A wait time timing is set when the signal module is waiting for the interlocking computer to switch the command, the signal module actively lightens the prohibition light of the signal, the red light, if the interlocking computer does not switch the command after the timing ends.

When the signal module actively performs availability degradation:
For scenarios that require a response speed of availability degradation, when the interlocking computer sends a control command, it will also send a lower-level signal command as an additional command to the signal module, the signal module can directly and actively use the signal lower-level clearing command to lighten the new target light point.

Exemplarily, taking that the green light is cleared by the signal A as an example, the yellow light is defined as a lower-level signal command of the green light in practical applications. When the interlocking computer sends a green light clearing command to the signal module, it also sends a yellow light clearing command as an additional command to the signal module. After receiving the command from the interlocking computer, the signal module cuts off power supply of other light points and supplies power to the green light. After the green light is lightened, the signal module feeds back to the interlocking computer an indication state that the green light is already cleared by the signal, feeds back execution success of the command, feeds back information that the light point is normal. After the green light is lightened, the signal module continuously monitors lightening of the light point, the signal module will cut off power supply of the green light and start to supply power to the yellow light if the green light is found to be accidentally extinguished. After the yellow light is cleared, the signal module feeds back to the interlocking computer an indication state that the yellow light is cleared by the signal A, feeds back execution success of the command, feeds back information of that the green light point has a failure; the interlocking computer receives the signal information, switches the signal command to the lower-level yellow light command, and alarms the operation and maintenance personnel at the same time.

The present invention further provides an automatic degradation system for a full electronic interlocking signal, as shown in FIG. 6, the system includes an interlocking computer, a signal module, and a signal, wherein
the interlocking computer is for sending a control command to the signal module;
the signal module is for managing a signal according to the control command, meanwhile continuously monitoring an indication state cleared by the signal, determining whether to perform signal automatic degradation according to the indication state cleared by the signal, and further feeding back the indication state cleared by the signal and auxiliary information to the interlocking computer.
the signal is for signal indication.

Specifically, the interlocking computer and the signal module transmit information through the Ethernet, the interlocking computer sends control commands to the signal module through the Ethernet, the signal module feeds back an indication state cleared by the signal and auxiliary information to the interlocking computer through the Ethernet; the signal module is connected to the signal through the cable, and controls the light point in the signal to be lightened or extinguished.

By differentiating the degradation function, the present invention makes a division into abnormality protection degradation and availability degradation. For abnormality protection degradation, respond can be made quickly when danger indication is found, which improves the processing speed and avoids the time delay caused by a system failure or external factors; for availability degradation, degradation response time is reduced through an additional command mode, which improves safety and availability.

Although the present invention has been described in detail with reference to the foregoing embodiments, those of ordinary skill in the art should understand that they can still modify the technical solutions described in the foregoing embodiments, or equivalently replace some of the technical features as long as these modifications do not deviate from the scope defined in the appended claims.

## Claims

1. An automatic degradation method for a full electronic interlocking signal, comprising:
sending, by an interlocking computer, a control command to a signal module;
managing, by the signal module, a signal according to the control command, meanwhile continuously monitoring an indication state of the signal at clear;
determining, by the signal module, whether to perform signal automatic degradation according to the indication state of the signal at clear,
if it is determined to perform a signal automatic degradation, continuing to determine a type of signal automatic degradation, and performing the type of signal automatic degradation, including:
when the indication state of the signal at clear is that the signal indication is abnormal and there is a safety risk, performing a first type of signal automatic degradation, wherein the first type of signal automatic degradation is directly converting, by the signal module, the signal to a safe indication state;
when the indication state of the signal at clear is that the optimal indication cannot be normally lightened and there is no danger, performing a second type of signal automatic degradation, wherein the second type of signal automatic degradation including:
feeding back, by the signal module, the indication state of the signal at clear to the interlocking computer;
switching, by the interlocking computer, the control command to a command of lower-level clear signal according to the indication state of the signal at clear as received and sending it to the signal module;
if the signal module receives the command of lower-level clear signal within a set time period, supplying, by the signal module, power to a new target light point of the signal according to the command of lower-level clear signal, meanwhile stopping power supply of other light points of the signal;
if the signal module does not receive a command of lower-level clear signal within a set time period, lightening, by the signal module, a prohibition light point of the signal;
feeding back, by the signal module, the indication state of the signal at clear and auxiliary information to the interlocking computer,
wherein the auxiliary information includes command execution state and failure information.

2. The automatic degradation method for a full electronic interlocking signal according to claim 1, wherein
the control command includes: a signal clearing command, a command of lower-level clear signal, or a signal clearing command plus a command of lower-level clear signal.

3. The automatic degradation method for a full electronic interlocking signal according to claim 1, wherein
managing, by the signal module, a signal according to the control command specifically is:
supplying, by the signal module, power to a target light point of the signal according to the control command, meanwhile stopping power supply of other light points of the signal.

4. The automatic degradation method for a full electronic interlocking signal according to claim 1, wherein
determining, by the signal module, whether to perform signal automatic degradation according to the indication state of the signal at clear specifically is:
if the indication state of the signal at clear is normal indication, not performing signal automatic degradation;
if the indication state of the signal at clear is abnormal indication or that the optimal indication cannot be lightened normally, performing signal automatic degradation.

5. An automatic degradation system for a full electronic interlocking signal, comprising:
an interlocking computer configured to send a control command to a signal module;
the signal module configured to manage a signal according to the control command, meanwhile configured to continuously monitor an indication state of the signal at clear, to determine whether to perform signal automatic degradation according to the indication state of the signal at clear, to continue to determine a type of signal automatic degradation if signal automatic degradation is to be performed, and to feed back the indication state of the signal at clear and auxiliary information to the interlocking computer,
wherein the auxiliary information includes command execution state and failure information;
wherein the signal module configured to determine a type of signal automatic degradation is that:
when the indication state of the signal at clear is that the signal indication is abnormal and there is a safety risk, the signal module is configured to perform a first type of signal automatic degradation, including that the signal module is configured to directly convert the signal to a safe indication state;
when the indication state of the signal at clear is that the optimal indication cannot be normally lightened and there is no danger, the signal module is configured to perform a second type of signal automatic degradation, including that:
the signal module is configured to feed back the indication state of the signal at clear to the interlocking computer;
the interlocking computer is configured to switch the control command to a command of lower-level clear signal according to the indication state of the signal at clear as received and to send it to the signal module;
if the signal module receives the command of lower-level clear signal within a set time period, the signal module is configured to supply power to a new target light point of the signal according to the command of lower-level clear signal, meanwhile to stop power supply of other light points of the signal;
if the signal module does not receive the command of lower-level clear signal within a set time period, the signal module is configured to lighten a prohibition light point of the signal.

6. The automatic degradation system for a full electronic interlocking signal according to claim 5, wherein
the control command includes: a signal clearing command, a command of lower-level clear signal, or a signal clearing command plus a command of lower-level clear signal.

7. The automatic degradation system for a full electronic interlocking signal according to claim 5, wherein
the signal module configured to manage a signal according to the control command is that:
the signal module is configured to supply, by the signal module, power to a target light point of the signal according to the control command, meanwhile to stop power supply of other light points of the signal.

8. The automatic degradation system for a full electronic interlocking signal according to claim 5, wherein
the signal module configured to determine whether to perform signal automatic degradation according to the indication state of the signal at clear specifically is that:
if the indication state of the signal at clear is normal indication, the signal module is configured not to perform signal automatic degradation;
if the indication state of the signal at clear is abnormal indication or that optimal indication cannot be lightened normally, the signal module is configured to perform signal automatic degradation.

## Patentansprüche

1. Verfahren zur automatischen Abschwächung eines vollelektronischen Stellsignals, umfassend:
Senden, durch einen Stellwerkcomputer, eines Steuerbefehls an ein Signalmodul;
Behandeln, durch das Signalmodul, eines Signals gemäß dem Steuerbefehl, währenddessen kontinuierliches Überwachen eines Anzeigezustands des Signals bei Fahrt;
Bestimmen, durch das Signalmodul, ob eine automatische Signalabschwächung durchzuführen ist, gemäß dem Anzeigezustand des Signals bei Fahrt,
falls bestimmt wird, dass eine automatische Signalabschwächung durchzuführen ist, weiterhin Bestimmen einer Art von automatischer Signalabschwächung und Durchführen der Art von automatischer Signalabschwächung, was Folgendes beinhaltet:
wenn der Anzeigezustand des Signals bei Fahrt ist, dass die Signalanzeige anormal ist und ein Sicherheitsrisiko besteht, Durchführen einer ersten Art von automatischer Signalabschwächung, wobei die erste Art von automatischer Signalabschwächung in direktem Umstellen, durch das Signalmodul, des Signals auf einen sicheren Anzeigezustand besteht;
wenn der Anzeigezustand des Signals bei Fahrt ist, dass die optimale Anzeige nicht normal beleuchtet sein kann und keine Gefahr besteht, Durchführen einer zweiten Art von automatischer Signalabschwächung, wobei die zweite Art von automatischer Signalabschwächung Folgendes beinhaltet:
Rückmelden, durch das Signalmodul, des Anzeigezustands des Signals bei Fahrt an den Stellwerkcomputer;
Umschalten, durch den Stellwerkcomputer, des Steuerbefehls auf einen Befehl eines Fahrsignals einer niedrigeren Ebene gemäß dem Anzeigezustand des Signals bei Fahrt, wie empfangen, und Senden desselben an das Signalmodul;
falls das Signalmodul den Befehl eines Fahrsignals einer niedrigeren Ebene innerhalb eines festgelegten Zeitraums empfängt, Zuführen, durch das Signalmodul, von Leistung zu einem neuen Ziellichtpunkt des Signals gemäß dem Befehl eines Fahrsignals einer niedrigeren Ebene, währenddessen Stoppen der Leistungszufuhr zu anderen Lichtpunkten des Signals;
falls das Signalmodul einen Befehl eines Fahrsignals einer niedrigeren Ebene nicht innerhalb eines festgelegten Zeitraums empfängt, Beleuchten, durch das Signalmodul, eines Verbotslichtpunkts des Signals;
Rückmelden, durch das Signalmodul, des Anzeigezustands des Signals bei Fahrt und von Zusatzinformationen an den Stellwerkcomputer,
wobei die Zusatzinformationen Befehlsausführungszustands- und Fehlerinformationen beinhalten.

2. Verfahren zur automatischen Abschwächung eines vollelektronischen Stellsignals nach Anspruch 1, wobei
der Steuerbefehl Folgendes beinhaltet: einen Signalfahrbefehl, einen Befehl eines Fahrsignals einer niedrigeren Ebene oder einen Signalfahrbefehl plus einen Befehl eines Löschsignals einer niedrigeren Ebene.

3. Verfahren zur automatischen Abschwächung eines vollelektronischen Stellsignals nach Anspruch 1, wobei
es sich bei dem Behandeln, durch das Signalmodul, eines Signals gemäß dem Steuerbefehl konkret um Folgendes handelt:
Zuführen, durch das Signalmodul, von Leistung zu einem Ziellichtpunkt des Signals gemäß dem Steuerbefehl, währenddessen Stoppen der Leistungszufuhr zu anderen Lichtpunkten des Signals.

4. Verfahren zur automatischen Abschwächung eines vollelektronischen Stellsignals nach Anspruch 1, wobei
es sich bei dem Bestimmen, durch das Signalmodul, ob eine automatische Signalabschwächung durchzuführen ist, gemäß dem Anzeigezustand des Signals bei Fahrt konkret um Folgendes handelt:
falls der Anzeigezustand des Signals bei Fahrt eine normale Anzeige ist, Nicht-Durchführen einer automatischen Signalabschwächung;
falls der Anzeigezustand des Signals bei Fahrt eine anormale Anzeige ist oder dass die optimale Anzeige nicht normal beleuchtet sein kann, Durchführen einer automatischen Signalabschwächung.

5. System zur automatischen Abschwächung eines vollelektronischen Stellsignals, umfassend:
einen Stellwerkcomputer, der dazu ausgelegt ist, einen Steuerbefehl an ein Signalmodul zu senden;
das Signalmodul, das dazu ausgelegt ist, ein Signal gemäß dem Steuerbefehl zu behandeln, während es dazu ausgelegt ist, einen Anzeigezustand des Signals bei Fahrt kontinuierlich zu überwachen, gemäß dem Anzeigezustand des Signals bei Fahrt zu bestimmen, ob eine automatische Signalabschwächung durchzuführen ist, weiterhin eine Art von automatischer Signalabschwächung zu bestimmen, falls eine automatische Signalabschwächung durchzuführen ist, und den Anzeigezustand des Signals bei Fahrt und Zusatzinformationen an den Stellwerkcomputer rückzumelden,
wobei die Zusatzinformationen Befehlsausführungszustands- und Fehlerinformationen beinhalten;
wobei das Signalmodul, das dazu ausgelegt ist, eine Art von automatischer Signalabschwächung zu bestimmen, darin besteht, dass:
wenn der Anzeigezustand des Signals bei Fahrt ist, dass die Signalanzeige anormal ist und ein Sicherheitsrisiko besteht, das Signalmodul dazu ausgelegt ist, eine erste Art von automatischer Signalabschwächung durchzuführen, die beinhaltet, dass das Signalmodul dazu ausgelegt ist, das Signal direkt auf einen sicheren Anzeigezustand umzustellen;
wenn der Anzeigezustand des Signals bei Fahrt ist, dass die optimale Anzeige nicht normal beleuchtet sein kann und keine Gefahr besteht, das Signalmodul dazu ausgelegt ist, eine zweite Art von automatischer Signalabschwächung durchzuführen, die beinhaltet, dass:
das Signalmodul dazu ausgelegt ist, den Anzeigezustand des Signals bei Fahrt an den Stellwerkcomputer rückzumelden;
der Stellwerkcomputer dazu ausgelegt ist, den Steuerbefehl auf einen Befehl eines Fahrsignals einer niedrigeren Ebene gemäß dem Anzeigezustand des Signals bei Fahrt, wie empfangen, umzuschalten und diesen an das Signalmodul zu senden;
falls das Signalmodul den Befehl eines Fahrsignals einer niedrigeren Ebene innerhalb eines festgelegten Zeitraums empfängt, das Signalmodul dazu ausgelegt ist, Leistung an einen neuen Ziellichtpunkt des Signals gemäß dem Befehl eines Fahrsignals einer niedrigeren Ebene zuzuführen und währenddessen die Leistungszufuhr zu anderen Lichtpunkten des Signals zu stoppen;
falls das Signalmodul den Befehl eines Fahrsignals einer niedrigeren Ebene nicht innerhalb eines festgelegten Zeitraums empfängt, das Signalmodul dazu ausgelegt ist, einen Verbotslichtpunkt des Signals zu beleuchten.

6. System zur automatischen Abschwächung eines vollelektronischen Stellsignals nach Anspruch 5, wobei
der Steuerbefehl Folgendes beinhaltet: einen Signalfahrbefehl, einen Befehl eines Fahrsignals einer niedrigeren Ebene oder einen Signalfahrbefehl plus einen Befehl eines Löschsignals einer niedrigeren Ebene.

7. System zur automatischen Abschwächung eines vollelektronischen Stellsignals nach Anspruch 5, wobei
dass das Signalmodul dazu ausgelegt ist, ein Signal gemäß dem Steuerbefehl zu behandeln, darin besteht, dass:
das Signalmodul dazu ausgelegt ist, durch das Signalmodul, Leistung einem Ziellichtpunkt des Signals gemäß dem Steuerbefehl zuzuführen und währenddessen die Leistungszufuhr zu anderen Lichtpunkten des Signals zu stoppen.

8. System zur automatischen Abschwächung eines vollelektronischen Stellsignals nach Anspruch 5, wobei
dass das Signalmodul dazu konfiguriert ist, gemäß dem Anzeigezustand des Signals bei Fahrt zu bestimmen, ob eine automatische Signalabschwächung durchzuführen ist, darin besteht, dass:
falls der Anzeigezustand des Signals bei Fahrt eine normale Anzeige ist, das Signalmodul dazu ausgelegt ist, keine automatische Signalabschwächung durchzuführen;
falls der Anzeigezustand des Signals bei Fahrt eine anormale Anzeige ist oder dass eine optimale Anzeige nicht normal beleuchtet sein kann, das Signalmodul dazu ausgelegt ist, eine automatische Signalabschwächung durchzuführen.

## Revendications

1. Procédé de dégradation automatique d'un signal d'interverrouillage entièrement électronique, comprenant :
l'envoi, par un ordinateur d'interverrouillage, d'une commande de contrôle à un module de signal ;
la gestion, par le module de signal, d'un signal selon la commande de contrôle, tout en surveillant en continu un état d'indication du signal à libération ;
la détermination, par le module de signal, s'il faut réaliser une dégradation automatique de signal selon l'état d'indication du signal à libération,
s'il est déterminé qu'il faut réaliser une dégradation automatique de signal, la poursuite de la détermination d'un type de dégradation automatique de signal, et la réalisation du type de dégradation automatique de signal, incluant :
lorsque l'état d'indication du signal à libération est que l'indication de signal est anormale et qu'il existe un risque de sécurité, la réalisation d'un premier type de dégradation automatique de signal, dans lequel le premier type de dégradation automatique de signal consiste à convertir directement, par le module de signal, le signal à un état d'indication sûr ;
lorsque l'état d'indication du signal à libération est que l'indication optimale ne peut pas s'éclairer normalement et qu'il n'y a pas de danger, la réalisation d'un second type de dégradation automatique de signal, dans lequel le second type de dégradation automatique de signal incluant :
la retransmission, par le module de signal, de l'état d'indication du signal à libération à l'ordinateur d'interverrouillage ;
la commutation, par l'ordinateur d'interverrouillage, de la commande de contrôle en une commande de signal de libération de niveau inférieur selon l'état d'indication du signal à libération reçu et l'envoi de celle-ci au module de signal ;
si le module de signal reçoit la commande de signal de libération de niveau inférieur dans une période de temps définie, l'alimentation, par le module de signal, d'un nouveau point lumineux cible du signal selon la commande de signal de libération de niveau inférieur, tout en arrêtant l'alimentation des autres points lumineux du signal ;
si le module de signal ne reçoit pas de commande de signal de libération de niveau inférieur dans une période de temps définie, l'éclairage, par le module de signal, d'un point lumineux d'interdiction du signal ;
la retransmission, par le module de signal, de l'état d'indication du signal à libération et d'informations auxiliaires à l'ordinateur d'interverrouillage,
dans lequel les informations auxiliaires incluent des informations d'état d'exécution de commande et de défaillance.

2. Procédé de dégradation automatique d'un signal d'interverrouillage entièrement électronique selon la revendication 1, dans lequel
la commande de contrôle inclut : une commande de libération de signal, une commande de signal de libération de niveau inférieur, ou une commande de libération de signal plus une commande de signal de libération de niveau inférieur.

3. Procédé de dégradation automatique d'un signal d'interverrouillage entièrement électronique selon la revendication 1, dans lequel
la gestion, par le module de signal, d'un signal selon la commande de contrôle consiste spécifiquement en :
l'alimentation, par le module de signal, d'un point lumineux cible du signal selon la commande de contrôle, tout en arrêtant l'alimentation des autres points lumineux du signal.

4. Procédé de dégradation automatique d'un signal d'interverrouillage entièrement électronique selon la revendication 1, dans lequel
la détermination, par le module de signal, s'il faut réaliser une dégradation automatique de signal selon l'état d'indication du signal à libération consiste spécifiquement en :
si l'état d'indication du signal à libération est une indication normale, la non-réalisation de la dégradation automatique de signal ;
si l'état d'indication du signal à libération est une indication anormale ou que l'indication optimale ne peut pas s'éclairer normalement, la réalisation d'une dégradation automatique de signal.

5. Système de dégradation automatique d'un signal d'interverrouillage entièrement électronique, comprenant :
un ordinateur d'interverrouillage configuré pour envoyer une commande de contrôle à un module de signal ; le module de signal étant configuré pour gérer un signal selon la commande de contrôle, tout en étant configuré pour surveiller en continu un état d'indication du signal à libération, pour déterminer s'il faut réaliser une dégradation automatique de signal selon l'état d'indication du signal à libération, pour poursuivre la détermination d'un type de dégradation automatique de signal si une dégradation automatique de signal doit être réalisée, et pour retransmettre l'état d'indication du signal à libération et des informations auxiliaires à l'ordinateur d'interverrouillage,
dans lequel les informations auxiliaires incluent des informations d'état d'exécution de commande et de défaillance ;
dans lequel le module de signal configuré pour déterminer un type de dégradation automatique de signal consiste en ce que :
lorsque l'état d'indication du signal à libération est que l'indication de signal est anormale et qu'il existe un risque de sécurité, le module de signal est configuré pour réaliser un premier type de dégradation automatique de signal, incluant le fait que le module de signal est configuré pour convertir directement le signal à un état d'indication sûr ;
lorsque l'état d'indication du signal à libération est que l'indication optimale ne peut pas s'éclairer normalement et qu'il n'y a pas de danger, le module de signal est configuré pour réaliser un second type de dégradation automatique de signal, incluant le fait que :
le module de signal est configuré pour retransmettre l'état d'indication du signal à libération à l'ordinateur d'interverrouillage ;
l'ordinateur d'interverrouillage est configuré pour commuter la commande de contrôle en une commande de signal de libération de niveau inférieur selon l'état d'indication du signal à libération reçu et pour envoyer celle-ci au module de signal ;
si le module de signal reçoit la commande de signal de libération de niveau inférieur dans une période de temps définie, le module de signal est configuré pour alimenter un nouveau point lumineux cible du signal selon la commande de signal de libération de niveau inférieur, tout en même temps pour arrêter l'alimentation des autres points lumineux du signal ;
si le module de signal ne reçoit pas la commande du signal de libération de niveau inférieur dans une période de temps définie, le module de signal est configuré pour éclairer un point lumineux d'interdiction du signal.

6. Système de dégradation automatique d'un signal d'interverrouillage entièrement électronique selon la revendication 5, dans lequel
la commande de contrôle inclut : une commande de libération de signal, une commande de signal de libération de niveau inférieur, ou une commande de libération de signal plus une commande de signal de libération de niveau inférieur.

7. Système de dégradation automatique d'un signal d'interverrouillage entièrement électronique selon la revendication 5, dans lequel
le module de signal configuré pour gérer un signal selon la commande de contrôle consiste en ce que :
le module de signal est configuré pour alimenter, par le module de signal, un point lumineux cible du signal selon la commande de contrôle, et tout en même temps pour arrêter l'alimentation des autres points lumineux du signal.

8. Système de dégradation automatique d'un signal d'interverrouillage entièrement électronique selon la revendication 5, dans lequel
le module de signal configuré pour déterminer s'il faut réaliser une dégradation automatique de signal selon l'état d'indication du signal à libération consiste spécifiquement en ce que :
si l'état d'indication du signal à libération est une indication normale, le module de signal est configuré pour ne pas réaliser de dégradation automatique de signal ;
si l'état d'indication du signal à libération est une indication anormale ou que l'indication optimale ne peut pas s'éclairer normalement, le module de signal est configuré pour réaliser une dégradation automatique de signal.
